# EUROPEAN PATENT SPECIFICATION

(11) **EP 2 476 310 B1**
(45) Date of publication and mention of the grant of the patent: **08.03.2017**
(21) Application number: 11194840.2
(22) Date of filing: 21.12.2011
(51) Int. Cl.: A01K 95/00

(54) **A ballast weight for a fishing line**
Ballastgewicht für eine Angelschnur
Poids de ballast pour ligne de pêche

(30) Priority: 13.01.2011 IT MO20110004
(43) Date of publication of application: 18.07.2012
(73) Proprietor: Gaudieri, Gianni, 00054 Fiumicino (Roma) (IT)
(72) Inventor: Gaudieri, Gianni, 00054 Fiumicino (Roma) (IT)
(74) Representative: Colò, Chiara

(56) References cited:
- US-A- 2 611 988
- US-A- 4 477 996
- US-A- 4 837 966
- US-A- 5 406 739
- US-A1- 2002 178 646

## Description

The present invention relates to a ballast weight for a fishing line.

The ballast weight of the present invention is particularly, but not exclusively, suitable for performing long casts in shore fishing.

Performing a long cast requires use of a ballast weight of relatively high weight, on average about 50-200 grams, associated to a end portion of the fishing line used.

The ballast weights at present available exhibit various conformations, more or less elongate or spherical, but are all characterised by a certain instability during the flight stage thereof. This means that the ballast weights at present available take on a flight trim that is characterised by a relatively high coefficient CX, which in practice prevents any casts of more than 100 metres from being attained.

An example of prior art ballast weight is known from document US2002/178646.

The aim of the present invention is to provide a ballast weight for a fishing line which obviates the drawbacks of the ballast weights of known type. An advantage of the ballast weight of the present invention is that it is extremely stable during the flight stage.

A further advantage of the ballast weight of the present invention is that it exhibits a particularly aerodynamic shape.

A further advantage of the ballast weight of the present invention is that it is provided with a considerably greater weight than known-type ballast weights.

Further characteristics and advantages of the present invention will more fully emerge from the following description, provided by way of nonlimiting example, of a preferred but not exclusive embodiment of the invention, made in the following with reference to the accompanying drawings, in which:
- figures from 1 to 5 respectively illustrate a section view performed according to the median longitudinal plane T, a view from below, a view from above, a front view and a rear view of a first embodiment of the ballast weight of the present invention;
- figures from 6 to 10 respectively illustrate a section view performed according to the median longitudinal plane T, a view from below, a view from above, a front view and a rear view of a second embodiment of the ballast weight of the present invention;
- figures from 11 to 15 respectively illustrate a section view performed according to the median longitudinal plane T, a view from below, a view from above, a front view and a rear view of a third embodiment of the ballast weight of the present invention;
- figures from 16 to 20 respectively illustrate a section view performed according to the median longitudinal plane T, a view from below, a view from above, a front view and a rear view of a fourth embodiment of the ballast weight of the present invention;
- figures from 21 to 25 respectively illustrate a section view performed according to the median longitudinal plane T, a view from below, a view from above, a front view and a rear view of a fifth embodiment of the ballast weight of the present invention;

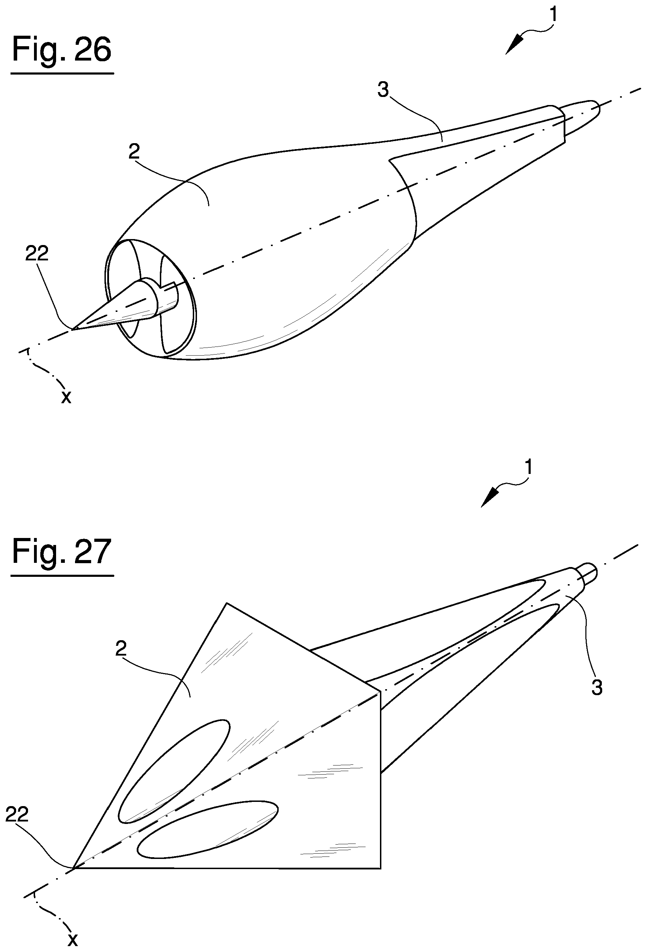

- figures 26 and 27 show two further embodiments of the ballast weight.

With reference to the above-cited figures, the ballast weight of the present invention comprises a main body 1 that is destined to be associated to a ballast weight for fishing. The main body 1 is normally made of lead, but might also be made of other metals or metal alloys, or other materials besides, such as wood, plastic, rubber or glass; it may also be made of a layered combination of some of the above. The main body 1 comprises a front portion 2 having a tapered shape which terminate in an apex that is more or less sharply pointed. The main body 1 further comprises a rear portion 3 on which, at a tail end of the main body 1, an eyelet 7 is fashioned to enable connection of the main body 1 to a ballast weight. The thickness of the eyelet 7 is comprised, by way of indication, between 0.8 and 1 mm.

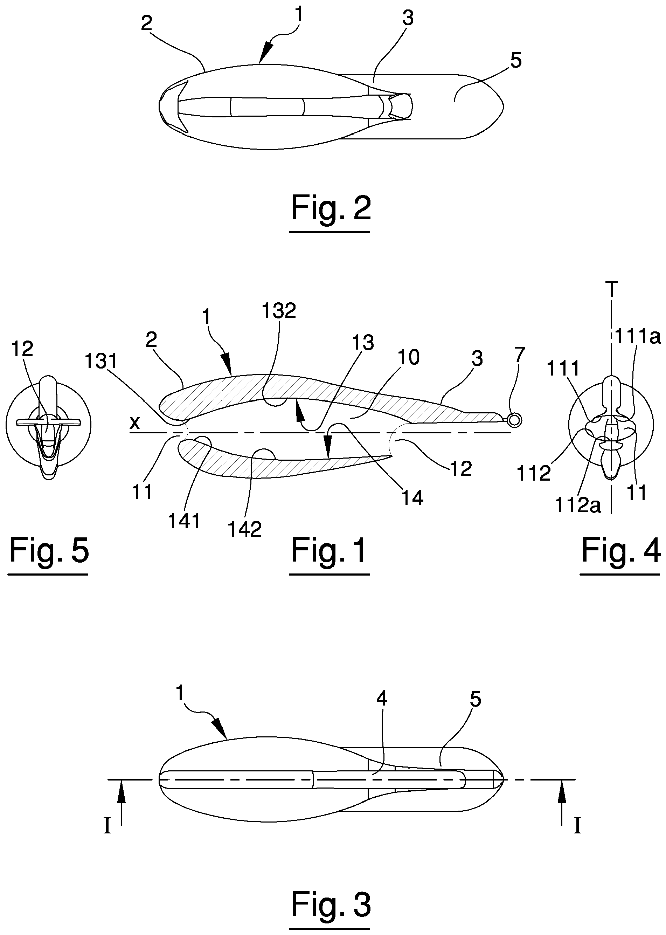

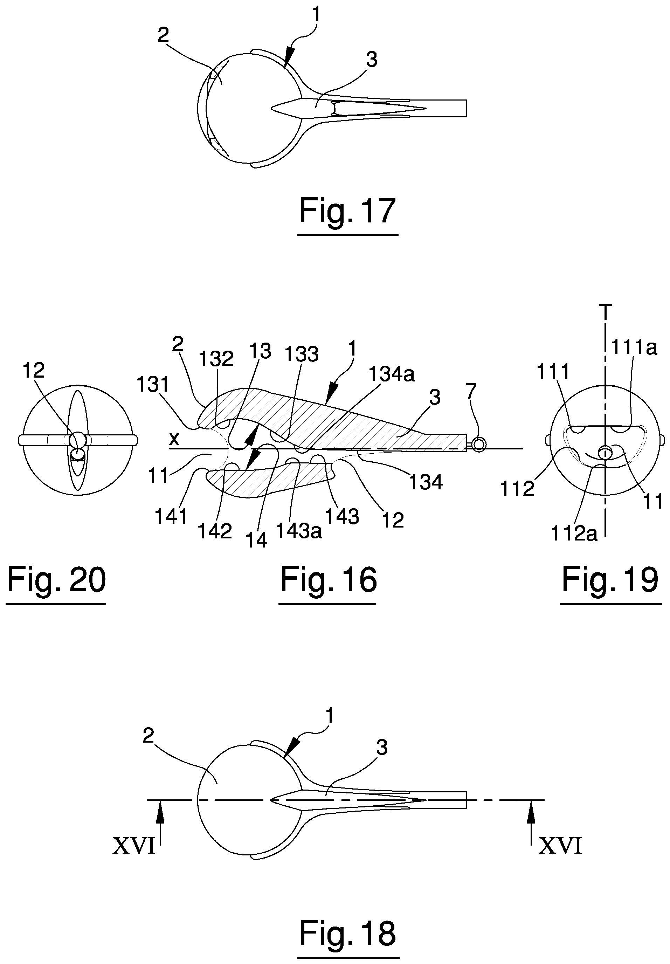

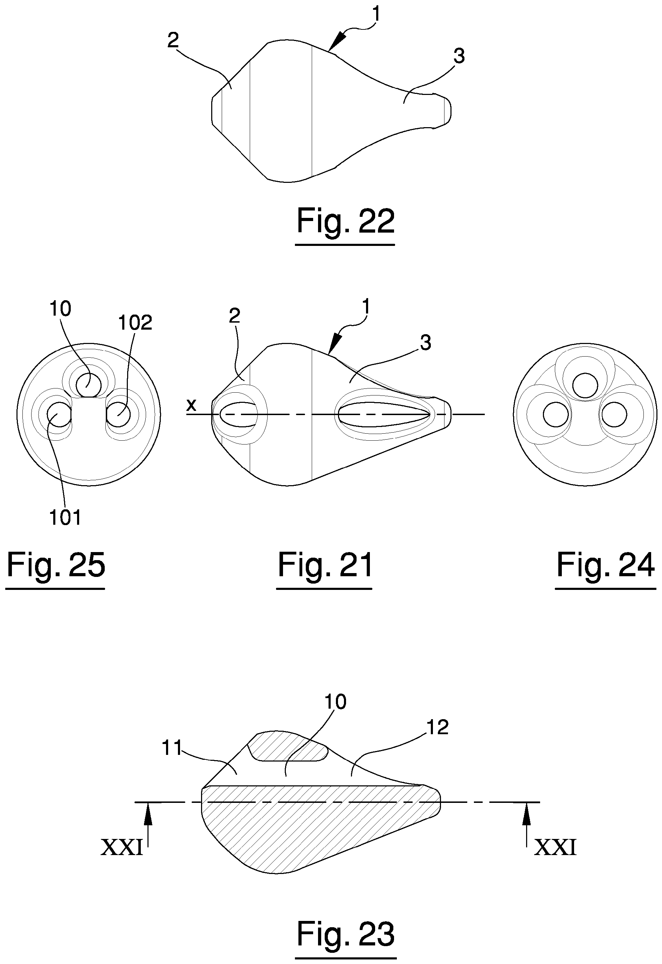

The main body 1 preferably exhibits an elongate shape, oval or tear-shaped, provided with a longitudinal axis x (figures 1, 6, 11, 21). Alternatively the main body 1 could comprise a front portion 2 having a spherical shape, joined to an elongate rear portion 3 (figure 16). The more elongate shapes are useful for increasing the length of the cast, while spherical or less elongate shapes favour stability of the ballast weight on the sea bottom. The main body 1 further comprises a through-channel 10 provided with an inlet opening 11 and an outlet opening 12 located on the external surface of the main body 1, respectively on the front portion 2 and the rear portion 3 of the main body 1. Overall the through-channel 10 is orientated in a parallel direction to the longitudinal axis X and exhibits a progression and
size that are variable and favour penetration of the ballast weight into the air during the flight thereof.

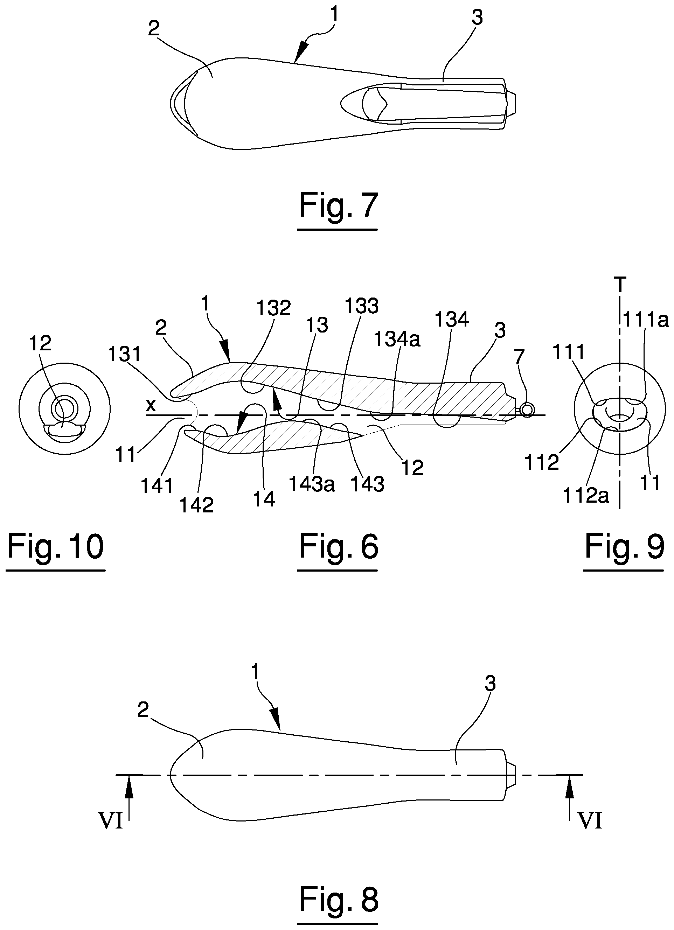

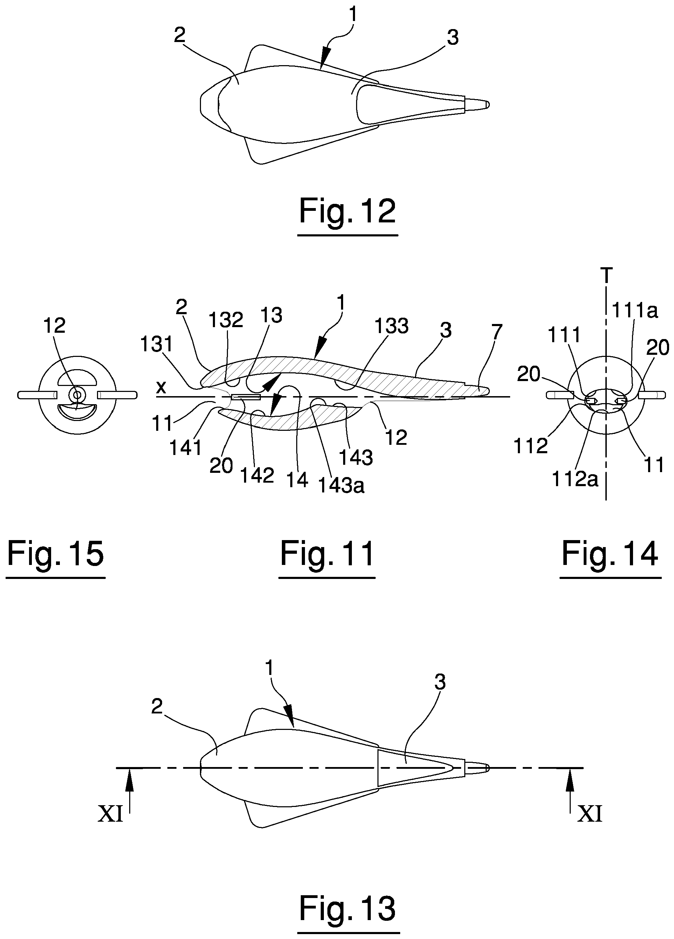

The through-channel 10 preferably exhibits, on a median longitudinal section plane T containing the longitudinal axis X, an upper profile 13
having a curved extension. The upper profile comprises a first tract 131, arranged in proximity of the inlet opening 11, which exhibits a convex development. The upper profile comprises a first tract 131, arranged in proximity of the inlet opening 11, which exhibits a convex development. The upper profile 13 further comprising a second tract 132, connected to the first tract 131, which exhibits a concave development and, in the embodiment shown in figure 2, terminates at the outlet opening 12. In the alternative embodiments, a third tract 133 of the upper profile 13 can be arranged consecutively to the second tract 132 before the outlet opening 12. The third tract 133 can develop substantially straight and parallel to the longitudinal axis X, as shown in figure 16, or, as shown in figure 6 and figure 11, can exhibit a declining progression. In the last described embodiment, the third tract 133, before reaching the outlet opening 12, can be profiled with a end tract 134 that is straight or slightly concave. The end tract 134 is connected to the third tract 133 at a projecting loop 134a. The presence of the end tract 134, together with the presence of the projecting loop 134a, considerably amplifies the bearing effect produced by the through-channel 10.

On the same median longitudinal section plane T, the through-channel 10 exhibits a lower profile 14 having a curved progression. The lower profile 14 comprises a first tract 141, arranged in proximity of the inlet opening 11, which exhibits a convex development and a second tract 142, connected to the first tract 141, which exhibits a concave development and, in the embodiment shown in figure 2, terminates at the outlet opening 12. In the alternative embodiments, a third tract 143 of the upper profile 13 can be arranged consecutively to the second tract 142 before the outlet opening 12. The third tract 143 can develop substantially straight and parallel to the longitudinal axis X, as shown in figure 11 and figure 16, or, as shown in figure 6, can exhibit a declining progression. In the last embodiment described, the third tract 143 is connected to the second tract 142 by means of a convex loop 143a. The presence of the third tract 143, together with the presence of the convex loop 143a, considerably amplifies the bearing effect produced by the through-channel 10.

As is visible in figure 1, the through-channel 10 substantially exhibits a first entry portion, delimited by the first tract 131 of the upper profile 13 and by the first tract 141 of the lower profile 14, which is substantially converging in a direction proceeding towards the inlet opening 11 towards the inside of the through-channel 10. A second portion of the through-channel 10 is connected to the entry portion and is delimited overall by the second tract 132 of the upper profile 13 and the second tract 142 of the lower profile 14. As the second tracts 132, 142 of the upper profile 13 and the lower profile 14 exhibit a concave development, the second portion of the through-channel 10 has a progression that first diverges, from the connecting zone with the entry tract up to a central section of maximum size, and thereafter a progression that converges. In the solutions illustrated in figures 6, 11, 16, the through-channel 10 exhibits also a end portion delimiting the third tract 133 of the upper profile 13 and the third tract 143 of the lower profile 14.

The presence and the morphological characteristics of the profile of the through-channel 10 offer important advantages. During the flight stage of the ballast weight there is created, along the through-channel 10, a flow of air that facilitates the flight of the ballast weight and, consequently, considerably increases the length of the cast of the ballast weight.

In the illustrated embodiment of figures from 21 to 25, the main body 1, which exhibits a tear shape, relatively squat and provided with a front section that is bigger than the main body 1 of the ballast weights described up to this point, is provided with three through-channels 10, 101, 102 substantially parallel to one another which further amplify the effects described for the preceding embodiments. In a further embodiment of the ballast weight, the three through-channels 10, 101, 102 can develop with a helical progression about the longitudinal axis X of the main body 1. The latter conformation of the through-channels 10, 101, 102 enables impressing on the ballast weight, during the flight stage thereof, a rotary motion about the longitudinal axis X which favours the stability and trim of the ballast weight itself, and contributes to further increasing the casting distance.

The presence of three or four through-channels, substantially parallel to one another and especially advantageous also in a further embodiment of the ballast weight, illustrated in figure 27, in which the main body 1 exhibits a front portion having a pyramidal shape with a vertex facing forwards. Each of the through-channels exhibits an inlet opening arranged on one of the faces of the pyramid, three or four according to whether the pyramid is square or triangular. The outlet opening of each channel is, differently, arranged on the base of the pyramid.

Particularly in the last embodiment of the ballast weight and the embodiment illustrated in figures from 21 to 25, but also in all the remaining embodiments of the ballast weight, the main body 1 can be provided with a frontal point 22. The frontal point 22 can be removably associated to the main body 1, for example by means of a threaded portion. The frontal point 22 projects forwards from the front portion 2 of the main body 1, such as to further facilitate the aerodynamic penetration of the ballast weight during the flight stage thereof. The shape of the frontal point 22 can be more or less sharp and is such as to be able to connect in a predetermined way to the main body 1.

A further embodiment of the ballast weight is illustrated in figure 26. In this variant, the main body 1 is provided with two flanked through-channels 10, 101 that develop with a mutually parallel progression. A frontal point 22 can be applied on the front portion 2, in an intermediate position between the two through-channels 10, 101.

In order to further increase the effects produced by the through-channel 10, the through-channel 10 can be provided internally with shaped tabs 20. The shaped tabs 20 project from the surface of the through-channel 10 towards the inside of the channel. For example, two shaped tabs 20 can be provided, located in opposite positions on a same horizontal plane, as shown in the embodiment of figure 11. A further two shaped tabs 20 might be located in a perpendicular plane to the preceding one, again in opposite positions. The shaped tabs 20 can have a flat or helical development, the helical development being useful for impressing on the ballast weight a rotation about its own longitudinal axis. The shaped tabs 20 can obviously be predisposed on all the illustrated embodiments.

To increase the flow rate of air through the through-channel 10, the inlet opening 11 of the through-channel 10 exhibits, on a frontal projection plane, a outline provided with an upper tract 111 which can have a concave development or a convex central portion. On the same projection plane, the inlet opening 11 of the through-channel 10 preferably exhibits a outline provided with a lower tract 112 preferably having a concave development. The lower tract could however be at least partly convex. The upper tract 111 and the lower tract 112 further intersect the median vertical longitudinal plane of the section I illustrated in figure 3, at the respective mid-points 111a, 112a. The mid-points 111a, 112a are on different transversal vertical planes. In particular, the mid-point 111a of the upper tract 111 is on a transversal vertical plane that is more advanced with respect to the mid-point 112a of the lower tract 112. This means that overall the inlet opening 11 is inclined and faces downwards, facilitating the flow of air along the channel 10 during the flight stage of the ballast weight.

To further increase the effect produced by the air flow, the outlet opening 12 of the through-channel 10 exhibits, on a frontal projection plane, an oval development outline. The outlet opening 12 can advantageously be provided also with a mobile plate, rotatably constrained to the outline of the outlet opening 12 about a transversal axis. The mobile plate, not illustrated, is free to rotate idle between a closing position, in which it occludes the outlet opening 12, and an opening position, in which it does not occlude the outlet opening 12. The mobile plate is brought into the opening position by effect of the thrust produced by the air flow through the through-channel 10. When on the other hand the ballast weight is on the fishing ground, the mobile plate is brought into the closing position by effect of the thrust produced by sand or other sediment which tends to enter the outlet opening 12.

To facilitate entry of air into the through-channel 10, as well as for facilitating the penetration of the air of the ballast weight, the main body 1 is preferably structured such that the centre of gravity thereof is in a lower zone of the main body. For this purpose, a weighting rib can be arranged below the main body 1.

To increase the in-flight stability of the ballast weight, the main body 1 is provided with at least a first stabilising wing 4, arranged preferably in an end zone of the rear portion 3 of the main body 1. The first stabilising wing 4 preferably develops mainly on a horizontal plane. A second stabilising wing 5, which develops mainly on a vertical plane, can be arranged in proximity of the first wing 4. The presence of the first and second stabilising wing give the ballast weight a very high degree of stability and directionality during the flight. The stabilising wings 4, 5 can be solidal with the main body 1, or can be fixed removably to the main body 1, for example by means of screws, such that it is possible to choose the number and position of the wings as desired. The stabilising wings 4, 5 can have a flat or helical development, which is useful for impressing a rotation of the ballast weight about the longitudinal axis thereof.

A further useful detail for improving the aerodynamic characteristics of the ballast weight can be to realise on the external surface of the ballast weight one or more annular grooves, arranged concentrically of the longitudinal axis of the main body of the ballast weight. The annular grooves, not illustrated, are preferably provided, on a median longitudinal section plane containing the longitudinal axis of the main body, of a curved profile.

## Claims

1. A ballast weight for a fishing line, comprising a main body (1) destined to be associated to a fishing line, which main body (1) comprises a front portion (2) and a rear portion (3) on which, at a tail end of the main body (1), an eyelet (7) is fashioned to enable connection of the main body 1 to a ballast weight, **characterised in that** it comprises a through-channel (10) provided with an inlet opening (11) and an outlet opening (12) located on the external surface of the main body (1), said through-channel (10) being overall orientated in a parallel direction to a longitudinal axis (X) of the main body (1) and being provided with a progression and a breadth that are variable, such that, during the flight stage of the ballast weight, there is created along the through-channel (10) a flow of air that facilitates the flight of the ballast weight.

2. The ballast weight according to claim 1, wherein said through-channel (10) exhibits, on a median longitudinal section plane (T) containing the longitudinal axis (X), an upper profile (13) which comprises a first tract (131), arranged in proximity of the inlet opening (11), which exhibits a convex development.

3. The ballast weight of claim 2, wherein said upper profile (13) of the through-channel (10) exhibits a second tract (132), connected to the first tract (131), which second tract (132) exhibits a concave development and terminates at the outlet opening (12).

4. The ballast weight of claim 3, wherein said upper profile (13) of the through-channel (10) exhibits a third tract (133) arranged consecutively to the second tract (132), which third tract (133) exhibits a progression that is substantially straight and parallel to the longitudinal axis (X).

5. The ballast weight of claim 3, wherein said upper profile (13) of the through-channel (10) exhibits a third tract (133) arranged consecutively to the second tract (132), which third tract (133) exhibits a declining progression.

6. The ballast weight of claim 5, wherein said third tract (133) comprises a end tract (134) that is straight or slightly concave and which is connected to the third tract (133) at a projecting loop (134a).

7. The ballast weight of one of the preceding claims, wherein said through-channel (10) exhibits, on a median longitudinal section plane (T) containing the longitudinal axis (X), a lower profile (14) which comprises a first tract (141), arranged in proximity of the inlet opening (11), which exhibits a convex development.

8. The ballast weight of claim 7, wherein said lower profile (14) of the through-channel (10) comprises a second tract (142), connected to the first tract (141), which exhibits a concave development and terminates at the outlet opening (12).

9. The ballast weight of claim 8, wherein said lower profile (14) of the through-channel (10) comprises a third tract (143) arranged consecutively to the second tract (142) which third tract (143) exhibits a progression that is substantially straight and parallel to the longitudinal axis (X).

10. The ballast weight of claim 8, wherein said lower profile (14) of the through-channel (10) comprises a third tract (143) arranged consecutively to the second tract (142) which third tract (143) exhibits a declining progression and which is connected to the second tract (142) by means of a convex loop (143a)

11. The ballast weight of one of the preceding claims, wherein the through-channel (10) is internally provided with shaped tabs (20).

12. The ballast weight of claims 4 and 5, wherein the upper tract (111) and the lower tract (112) intersect a median longitudinal section plane (T), containing the longitudinal axis (X), at respective mid-points (111a, 112a) that lie on distinct vertical transversal planes, said mid-point (111a) of the upper tract (111) lying on a vertical transversal plane that is more advanced with respect to the mid-point (112a) of the lower tract (112).

13. The ballast weight of one of the preceding claims, wherein the outlet opening (12) of the through-channel (10) exhibits, on a frontal projection plane, an oval outline.

14. The ballast weight of claim 13, wherein the outlet opening (12) is provided with a mobile plate, rotatably constrained to the outline of the outlet opening (12) about a transversal axis, which mobile plate is free to rotate idle between a closed position, in which it occludes the outlet opening (12) and an open position, in which it does not occlude the outlet opening (12).

15. The ballast weight of one of the preceding claims, wherein the main body (1) is provided with at least a stabilising wing (4) which projects from the main body (1) in an external direction.

16. The ballast weight of one of the preceding claims, wherein the main body (1) is provided with a frontal point (22) which projects forward of the front portion (2) of the main body (1).

17. The ballast weight of one of the preceding claims, comprising two flanked through-channels (10, 101) which develop with a reciprocally parallel progression.

18. The ballast weight of one of the preceding claims, comprising three through-channels (10, 101, 102) which develop with a parallel or helical progression about the longitudinal axis (X).

## Patentansprüche

1. Ballastgewicht für eine Angelschnur, umfassend einen Hauptkörper (1), der dazu bestimmt ist, mit einer Angelschnur verknüpft zu werden, wobei dieser Hauptkörper (1) einen frontseitigen Abschnitt (2) und einen rückseitigen Abschnitt (3) umfasst, auf dem an einem hinteren Ende des Hauptkörpers (1) eine Öse (7) ausgestaltet ist, um die Verbindung des Hauptkörpers (1) mit dem Ballastgewicht zu ermöglichen, **dadurch gekennzeichnet, dass** es einen Durchführungskanal (10) umfasst, der mit einer Einlassöffnung (11) und einer Auslassöffnung (12), befindlich an der äußeren Oberfläche des Hauptkörpers (1) ausgestattet ist, wobei der Durchführungskanal (10) insgesamt in eine Richtung ausgerichtet ist, die parallel zu einer Längsachse (X) des Hauptkörpers (1) verläuft, und mit Abfolge und einer Breite versehen ist, die variabel sind, sodass während der Flugphase des Ballastgewichts entlang des Durchführungskanals (10) ein Luftstrom geschaffen wird, der den Flug des Ballastgewichts erleichtert.

2. Ballastgewicht nach Anspruch 1, wobei der Durchführungskanal (10) auf einer mittleren Längsschnittebene (T), die die Längsachse (X) enthält, ein oberes Profil (13) aufweist, das ein erstes Teilstück (131) umfasst, das in der Nähe der Einlassöffnung (11) angeordnet ist und eine konvexe Entwicklung aufweist.

3. Ballastgewicht nach Anspruch 2, wobei das obere Profil (13) des Durchführungskanals (10) ein zweites Teilstück (132) aufweist, das mit dem ersten Teilstück (131) verbunden ist, wobei das zweite Teilstück (132) eine konkave Entwicklung aufweist und an der Auslassöffnung (12) endet.

4. Ballastgewicht nach Anspruch 3, wobei das obere Profil (13) des Durchführungskanals (10) ein drittes Teilstück (133) aufweist, das nach dem zweiten Teilstück (132) angeordnet ist, wobei das dritte Teilstück (133) einen Ablauf aufweist, der im Wesentlichen gerade und parallel zur Längsachse (X) verläuft.

5. Ballastgewicht nach Anspruch 3, wobei das obere Profil (13) des Durchführungskanals (10) ein drittes Teilstück (133) aufweist, das nach dem zweiten Teilstück (132) angeordnet ist, wobei das dritte Teilstück (133) einen fallenden Ablauf aufweist.

6. Ballastgewicht nach Anspruch 5, wobei das dritte Teilstück (133) ein Endteilstück (134) umfasst, das gerade oder leicht konkav ist und mit dem dritten Teilstück (133) an einer hervorstehenden Schleife (134a) verbunden ist.

7. Ballastgewicht nach einem der vorhergehenden Ansprüche, wobei der Durchführungskanal (10) auf einer mittleren Längsschnittebene (T), die die Längsachse (X) enthält, ein unteres Profil (14) aufweist, das ein erstes Teilstück (141) umfasst, das in der Nähe der Einlassöffnung (11) angeordnet ist und eine konvexe Entwicklung aufweist.

8. Ballastgewicht nach Anspruch 7, wobei das untere Profil (14) des Durchführungskanals (10) ein zweites Teilstück (142) aufweist, das mit dem ersten Teilstück (141) verbunden ist und eine konkave Entwicklung aufweist und an der Auslassöffnung (12) endet.

9. Ballastgewicht nach Anspruch 8, wobei das untere Profil (14) des Durchführungskanals (10) ein drittes Teilstück (143) umfasst, das nach dem zweiten Teilstück (142) angeordnet ist, wobei das dritte Teilstück (143) einen Ablauf aufweist, der im Wesentlichen gerade und parallel zur Längsachse (X) verläuft.

10. Ballastgewicht nach Anspruch 8, wobei das untere Profil (14) des Durchführungskanals (10) ein drittes Teilstück (143) umfasst, das nach dem zweiten Teilstück (142) angeordnet ist, wobei das dritte Teilstück (143) einen fallenden Ablauf aufweist und mit dem zweiten Teilstück (142) mittels einer konvexen Schleife (143a) verbunden ist.

11. Ballastgewicht nach einem der vorhergehenden Ansprüche, wobei der Durchführungskanal (10) innenseitig mit geformten Laschen (20) versehen ist.

12. Ballastgewicht nach Anspruch 4 und 5, wobei das obere Teilstück (111) und das untere Teilstück (112) eine mittlere Längsschnittebene (T) schneiden, die die Längsachse (X) enthält, an jeweiligen Mittelpunkten (111a, 112a), die auf unterschiedlichen vertikalen Querebenen liegen, wobei der Mittelpunkt (111a) des oberen Teilstücks (111) auf einer vertikalen Querebene liegt, die im Vergleich zum Mittelpunkt (112a) des unteren Teilstücks (112) weiter vorgeschoben ist.

13. Ballastgewicht nach einem der vorhergehenden Ansprüche, wobei die Auslassöffnung (12) des Durchführungskanals (10) auf einer frontseitigen Vorsprungsebene eine ovale Kontur aufweist.

14. Ballastgewicht nach Anspruch 13, wobei die Auslassöffnung (12) mit einer mobilen Platte versehen ist, die drehbar fest mit der Kontur der Auslassöffnung (12) um eine Querachse verbunden ist, wobei sich diese mobile Platte frei frei laufend zwischen einer geschlossenen Position, in der sie die Auslassöffnung (12) verschließt, und einer offenen Position, in der sie die Auslassöffnung (12) nicht verschließt, drehen kann.

15. Ballastgewicht nach einem der vorhergehenden Ansprüche, wobei der Hauptkörper (1) mit mindestens einem Stabilisierungsflügel (4) versehen ist, der aus dem Hauptkörper (1) in eine nach außen führende Richtung hervorsteht.

16. Ballastgewicht nach einem der vorhergehenden Ansprüche, wobei der Hauptkörper (1) mit einem frontseitigen Punkt (22) versehen ist, der aus dem frontseitigen Abschnitt (2) des Hauptkörpers (1) nach vorn hervorsteht.

17. Ballastgewicht nach einem der vorhergehenden Ansprüche, umfassend zwei flankierte Durchführungskanäle (10, 101), die sich mit einem gegenseitig parallelen Ablauf entwickeln.

18. Ballastgewicht nach einem der vorhergehenden Ansprüche, umfassend drei Durchführungskanäle (10, 101, 102), die sich mit einem parallelen oder spiralförmigen Ablauf um die Längsachse (X) entwickeln.

## Revendications

1. Poids de ballast pour ligne de pêche, comprenant un corps principal (1) destiné à être associé à une ligne de pêche, ledit corps principal (1) comprend une partie antérieure (2) et une partie postérieure (3) sur laquelle, à la pointe du corps principal (1), un oeillet (7) est façonné pour permettre le raccordement du corps principal (1) à un poids de ballast, **caractérisé en ce qu'**il comprend un canal passant (10) pourvu d'une ouverture d'entrée (11) et d'une ouverture de sortie (12) situées sur la surface externe du corps principal (1), ledit canal passant (10) étant globalement orienté dans une direction parallèle à un axe longitudinal (X) du corps principal (1) et étant pourvu d'une progression et d'une largeur étant variables, de manière à ce que, lors de la phase de vol du poids de ballast, un écoulement d'air soit créé le long du canal passant (10) pour faciliter le vol du poids de ballast.

2. Poids de ballast selon la revendication 1, dans lequel ledit canal passant (10) présente, sur un plan de section longitudinale médian (T) contenant l'axe longitudinal (X), un profil supérieur (13) comprenant une première section (131), disposée à proximité de l'ouverture d'entrée (11), qui présente un développement convexe.

3. Poids de ballast selon la revendication 2, dans lequel ledit profil supérieur (13) du canal passant (10) présente une seconde section (132) reliée à la première section (131), ladite seconde section (132) présentant un développement concave et se terminant au niveau de l'ouverture de sortie (12).

4. Poids de ballast selon la revendication 3, dans lequel ledit profil supérieur (13) du canal passant (10) présente une troisième section (133) disposée consécutivement à la seconde section (132), ladite troisième section (133) présentant une progression étant substantiellement rectiligne et parallèle à l'axe longitudinal (X).

5. Poids de ballast selon la revendication 3, dans lequel ledit profil supérieur (13) du canal passant (10) présente une troisième section (133) disposée consécutivement à la seconde section (132), ladite troisième section (133) présentant une progression dégressive.

6. Poids de ballast selon la revendication 5, dans lequel ladite troisième section (133) comprend une section terminale (134) étant rectiligne ou légèrement concave et qui est reliée à la troisième section (133) au niveau d'une boucle en saillie (134a).

7. Poids de ballast selon l'une des revendications précédentes, dans lequel ledit canal passant (10) présente, sur un plan de section longitudinale médian (T) contenant l'axe longitudinal (X), un profil inférieur (14) comprenant une première section (141), disposée à proximité de l'ouverture d'entrée (11), qui présente un développement convexe.

8. Poids de ballast selon la revendication 7, dans lequel ledit profil inférieur (14) du canal passant (10) comprend une seconde section (142) reliée à la première section (141) qui présente un développement concave et se termine au niveau de l'ouverture de sortie (12).

9. Poids de ballast selon la revendication 8, dans lequel ledit profil inférieur (14) du canal passant (10) comprend une troisième section (143) disposée consécutivement à la seconde section (142), ladite troisième section (143) présentant une progression étant substantiellement rectiligne et parallèle à l'axe longitudinal (X).

10. Poids de ballast selon la revendication 8, dans lequel ledit profil inférieur (14) du canal passant (10) comprend une troisième section (143) disposée consécutivement à la seconde section (142), ladite troisième section (143) présentant une progression dégressive et étant reliée à la seconde section (142) par l'intermédiaire d'une boucle convexe (143a).

11. Poids de ballast selon l'une des revendications précédentes, dans lequel le canal passant (10) est pourvu en son sein de languettes façonnées (20).

12. Poids de ballast selon les revendications 4 et 5, dans lequel la section supérieure (111) et la section inférieure (112) croisent un plan de section longitudinale médian (T) contenant l'axe longitudinal (X) en des points médians respectifs (111a, 112a) qui reposent sur des plans transversaux verticaux distincts, lesdits points médians (111a) de la section supérieure (111) reposant sur un plan transversal vertical étant plus avancé par rapport au point médian (112a) de la section inférieure (112).

13. Poids de ballast selon l'une des revendications précédentes, dans lequel l'ouverture de sortie (12) du canal passant (10) présente, sur un plan de projection frontal, un profil ovale.

14. Poids de ballast selon la revendication 13, dans lequel l'ouverture de sortie (12) est pourvue d'une plaque mobile, solidaire de façon rotative du profil de l'ouverture de sortie (12) autour d'un axe transversal, ladite plaque mobile étant libre de tourner au point mort entre une position de fermeture, dans laquelle elle ferme l'ouverture de sortie (12) et une position d'ouverture, dans laquelle elle ne ferme pas l'ouverture de sortie (12).

15. Poids de ballast selon l'une des revendications précédentes, dans lequel le corps principal (1) est pourvu d'au moins une aile de stabilisation (4) qui dépasse du corps principal (1) dans une direction externe.

16. Poids de ballast selon l'une des revendications précédentes, dans lequel le corps principal (1) est pourvu d'un point frontal (22) dépassant en avant de la partie antérieure (2) du corps principal (1).

17. Poids de ballast selon l'une des revendications précédentes, comprenant deux canaux passants placés côte à côte (10, 101) qui se développent réciproquement avec une progression parallèle.

18. Poids de ballast selon l'une des revendications précédentes, comprenant trois canaux passants (10, 101, 102) qui se développent avec une progression parallèle ou hélicoïdale autour de l'axe longitudinal (X).
